Europäisches Patentamt

European Patent Office

Office européen des brevets

(11) Publication number: 0 266 799
A2

## EUROPEAN PATENT APPLICATION

(21) Application number: 87116518.9

(22) Date of filing: 09.11.87

(51) Int. Cl.4: G06F 3/00

(30) Priority: 07.11.86 JP 265857/86

(43) Date of publication of application:
11.05.88 Bulletin 88/19

(84) Designated Contracting States:
DE FR GB

(71) Applicant: NEC CORPORATION
33-1, Shiba 5-chome, Minato-ku
Tokyo 108(JP)

(72) Inventor: Sakamoto, Hideki c/o NEC
Corporation
33-1, Shiba 5-chome Minato-ku
Tokyo(JP)
Inventor: Matsushima, Osamu c/o NEC
Corporation
33-1, Shiba 5-chome Minato-ku
Tokyo(JP)

(74) Representative: Glawe, Delfs, Moll & Partner
Patentanwälte
Postfach 26 01 62 Liebherrstrasse 20
D-8000 München 26(DE)

(54) Single chip microcomputer having multi-timer function.

(57) A single chip microcomputer includes a timer, a memory storing necessary programs and various kinds of data, and a processing unit. Further, the microcomputer comprises a plurality of count registers each counting an output of the timer. The processing unit checks the contents of the count registers for generating an interrupt request each time anyone of the count registers becomes a predetermined value, whereby a plurality of interrupt requests are generated at different time period.

FIGURE 1

## Single Chip Microcomputer Having Multi-Timer Function

### Background of the Invention

#### Field of the Invention

The present invention relates to a single chip microcomputer having a timer, and more specifically, to a single chip microcomputer having a multi-timer function to allow different interrupt operations at different timings.

#### Description of related art

Advanced semiconductor technology has given various functions to a single chip microcomputer. Typical examples of the functions incorporated in the single chip microcomputer includes a timer function. For example, the microcomputer manages the time by using the timer function, and controls a destination device at a predetermined timing. However, if a plurality of devices are to be controlled at different timings, a timer function should be prepared for each of the devices to be controlled.

For example, if a microcomputer is used to control a video tape recorder/reproducer system (called "VTR system" hereinafter), four timers are used as a security timer for protection of some circuits incorporated in the VTR system. In this case, each of the four timers receives a reference clock from a time base and frequency-divides the received reference clock to a signal of a respective predetermined period. In one typical example of the VTR system, the time base generates the reference pulse at a period of 1/220 second, and a first timer receives the reference clock and frequency-divides it by 660 to generate a first interrupt request signal having a period of 3 seconds. This first timer is used for security to a drum rotation stop. A second timer for security to a winding reel rotation stop frequency-divides the reference clock by 1100 to produce a second interrupt request signal having a period of 5 seconds, and a third timer for a loading motor protection frequency-divides the reference clock by 1540 to output a third interrupt request signal having a period of 7 seconds. A four timer for a long time pause security generates a fourth interrupt request signal having a period of 300 seconds by frequency-dividing the reference clock by 66000.

As seen from the above, the conventional single chip microcomputer requires timers of the same number as that of devices to be controlled at different timings, i.e., the number of required timer processings. Therefore, the larger the number of required timer processings becomes, the larger the required hardware resources becomes, and so the larger the required chip area becomes. This means that the cost of microcomputers becomes higher.

### Summary of the Invention

Accordingly, it is an object of the present invention is to provide a single chip microcomputer which has overcome the drawback as mentioned above.

Another object of the present invention is to provide a single chip microcomputer capable of producing a plurality of different time periods without using a corresponding number of timers.

A further object of the present invention is to provide a single chip microcomputer having only one timer but having a plurality of timer functions to allow different interrupt operations at different timings.

A still further object of the present invention is to provide a single chip microcomputer capable of realizing a multi-timer function with a small amount of hardware resource.

The above and other objects of the present invention are achieved in accordance with the present invention by a single chip microcomputer including a timer for generating a clock signal at a predetermined period, a memory storing necessary programs and various kinds of data, and a processing unit, characterized in that it comprises a plurality of count registers each counting the clock signal of the timer, and means checking the contents of the count registers for generating an interrupt request each time anyone of the count registers becomes a predetermined value, whereby a plurality of interrupt requests are generated at different time periods.

The above and other objects, features and advantages of the present invention will be apparent from the following description of the preferred embodiments of the invention with reference to the accompanying drawings.

### Brief Description of the Drawings

Figure 1 is a block diagram of a first embodiment of the single chip microcomputer in accordance with the present invention;

Figure 2 is a flow chart illustrating an automatic frequency division operation executed in the microcomputer shown in Figure 1;

Figure 3 is a flow chart illustrating an interrupt operation executed in the microcomputer shown in Figure 1;

Figure 4 is a block diagram showing a modification of the microcomputer shown in Figure 1; and

Figure 5 is a flow chart illustrating an automatic frequency division operation executed in the microcomputer shown in Figure 4.

Description of the Preferred Embodiments

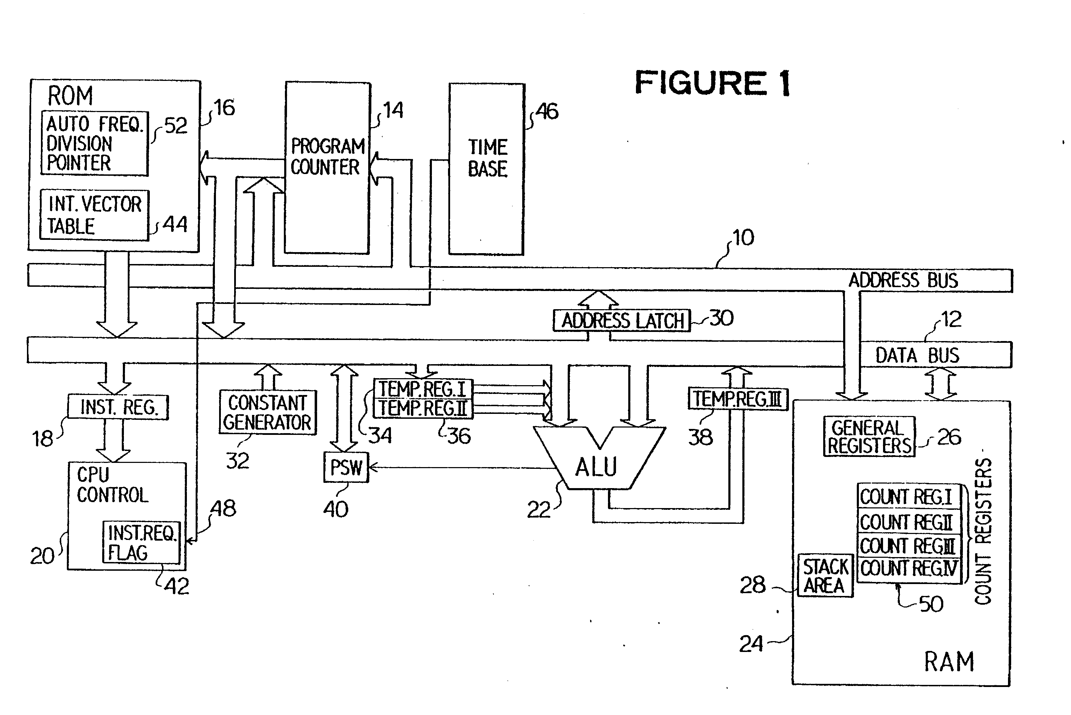

Referring to Figure 1, there is shown one embodiment of the single chip microcomputer in accordance with the present invention. The shown microcomputer comprises an address bus 10 for transferring an address information, and a data bus 12 for transferring data. Further, there is provided a program counter 14 functioning as a pointer for indicating an address of an instruction code to be executed. This program counter 14 not only is incremented or decremented each time the instruction is executed, but also can be rewritten through the address bus 10. An output of the program counter 14 is coupled to the data bus 12 and to a read only memory (ROM) 16 storing various programs. An instruction code read out of the ROM 16 is fed through the Data bus 12 to an instruction register 18, which is in turn coupled to a controller 20. This controller 20 controls various circuits contained in the microcomputer so that an operation designated by the instruction code held in the instruction register 18 is executed.

Furthermore, an arithmetic and logic unit 22 is coupled at their pair of inputs to the data bus 12, and a random access memory (RAM) 24 including general registers 26 used in the course of operation, stack registers 28 used to temporarily save data, etc. is coupled to the address bus 10 and the data bus 12. In addition, between the address bus 10 and the data bus 12 is coupled an address latch 30 for latching data on the data bus 12 so as to output it to the address bus 10. A constant generator 32 is coupled to the data bus 12 to supply the data bus 12 with various constants necessary for operation, interrupt, etc. A pair of temporary registers I and II, 34 and 36 are coupled between the data bus 12 and the input of the ALU 22 for latching data on the data bus 12 so as to output it to the ALU 22. These temporary registers I and II are used for temporarily storing an intermediate value of operation and values read from the ROM 16 and the RAM 24. A temporary register III, 38 is coupled between an output of the ALU 22 and the data bus 12 to latch the result of operation and then output it to the data bus 12. Furthermore, a program status word (PSW) 40 is connected to the ALU 22 to know the status of the program interrupted by an interrupt operation, i.e., the status of the ALU 22 in most cases. For example, a content of the PSW 40 is referred to when a conditional branch instruction is executed.

In compliance with an interrupt request, the controller 20 contains therein an interrupt request flag 42 which is set by an interrupt request signal from an external of the controller 20, and which is also set and cleared by the controller 20 itself. To handle an interrupt request, the controller 20 checks the content of the interrupt request flag 42 at a final machine cycle of each instruction execution cycle. On the other hand, in order to execute an interrupt processing program corresponding to the interrupt request, the ROM 16 contains therein an interrupt vector table 44 which stores a head address of various interrupt processing programs corresponding to respective interrupt requests.

The above mentioned structure is fundamentally based on a conventional microcomputer. In addition to the above structure, the shown microprocessor includes a time base 46 generating a pulse signal at a predetermined constant period. This pulse signal is supplied through an interrupt request signal line 48 to the interrupt request flag 42 so as to request an automatic frequency-division operation which will be explained hereinafter. Further, the RAM 24 contains therein a group of count registers 50 provided to be registered with respective ratios of frequency-division for obtaining a corresponding number of time periods. In this embodiment, to realize a multi-timer function corresponding to the four timers required in the VTR system mentioned hereinbefore, there are provided four count registers I, II, III and IV having continuous address numbers so that the register IV has a maximum address in the same register group.

Furthermore, the ROM 16 includes therein an automatic frequency division operation pointer 52 holding an address of one count register contained in the count register group 50, for example, an address of the count register IV having a maximum address number in the count register group 50.

In the case of having a multi-timer function equivalent to the four timers mentioned hereinbefore provided in the VTR system, for example, the time base 46 is constructed to generate a pulse signal at a period of 1/220 second. In this case, if the four count registers I, II, III and IV are assigned to the drum rotation stop security, the winding reel rotation stop security, the loading motor protection and the long time pause security, respectively, these count registers I, II, III and IV are written as initial values with 660, 1100, 1540 and 66000, respectively. In addition, the interrupt vector table 44 stores a vector indicating a head address of a processing program for the drum rotation stop security, another vector indicating a head address of a processing program for the winding reel rotation stop security, a third vector indicating a head address of a processing program for the loading motor protection, and a fourth vector indicating a head address of a processing program for the long time pause security.

Now, operation will be explained on the microprocessor mentioned above.

First, assume that the clock pulse is not generated by the time base 46. In this case, the microcomputer executes an ordinary program operation. Namely, an instruction code is read from the ROM 16 in accordance with the address indicated by the content of the program counter 14, and then supplied through the date bus 12 to the instruction register 18. The controller 20 decodes the instruction code held in the instruction register 18, and generates various control signals to various circuits in the microcomputer, so that the instruction is executed. For example, if the read-out instruction indicates a dyadic operation between two registers of the general registers 26, the values of the two registers are sequentially read out and inputted through the data bus 12 to the two inputs of the ALU 22. Thereafter, an instruction is given to the ALU 22, so that the ALU 22 executes an indicated operation between the two inputted values. The results of the operation is outputted from the ALU 22 to the temporary register III 38, and then fed through the data bus 12 to a destination register.

In the program operation as mentioned above, the controller 20 checks, at the final machine cycle of each instruction execution cycle, whether or not the instruction request flag 42 is set.

As mentioned above, the time base 46 generates the clock pulse, i.e., the automatic frequency-division operation request signal at the period of 1/220 second, so as to set the interrupt request flag 42 at the period of 1/220 second. At the final machine cycle of some instruction execution cycle, if the controller 20 detects that the interrupt request flag 42 has been set, the controller 20 stop the program operation and causes to start a microprogram for the automatic frequency division operation.

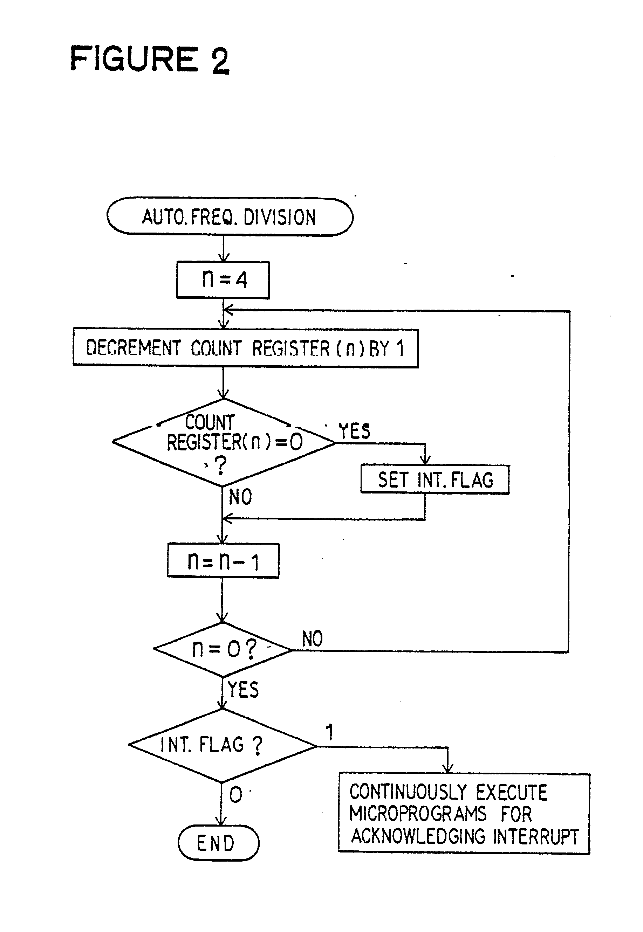

Namely, as shown in the flow chart of Figure 2, when the interrupt request flag 42 is detected as having been set, the controller 20 causes to execute the following operation in accordance with the automatic frequency division operation microprogram. First, it clears the flag 42 and causes the constant generator 32 to output the number of the count registers (4 in this embodiment) to the data bus 12 and to store it in the temporary register I, 34 as an initial value of a variable "n". In this case, on the other hand, since the program counter 14, the general register 26 and the PSW register 40 are not used, it is not necessary to save these registers. Namely, the contents of the program counter 14, the general register 26 and the PSW register 40 are maintained as they are without being saved to the stack area 28 or the like.

Thereafter, the controller 20 causes the constant generator 32 to output the address of the automatic frequency-division operation pointer 52 to the data bus 12 so that it is latched in the address latch 30. The content of the address latch 30 is supplied through the address bus 10 to the ROM 16, so that the automatic frequency-division operation pointer 52 is designated in the ROM 16. Thus, the content of the pointer 52 is outputted to the data bus 12 and latched in the temporary register II, 36. Then, the content of the temporary register II, 36 is fed through the ALU 22 and the temporary register III, 38 to the data bus 12, and latched to the address latch 30. The content of the address latch 30 is supplied through the address bus 10 to the RAM 24, so that the count register IV is designated. The content of the count register IV is outputted to the data bus 12 and inputted to the ALU 22 where the content of the counter register IV is decremented by 1. The result of the decrement is latched in the temporary register III, 38. At this time, if the result of the decrement is 0, the interrupt request flag 42 is set. Then, the content of temporary register III, 38 is outputted to the data bus. At this time, since the address of the count register IV is still outputted on the address bus 10, the result of the decrement is written into the count register IV.

Thereafter, the variable n (=4) stored in the temporary register I, 34 is supplied to the ALU 22 where the variable "n" is decremented by 1. The result of the decrement is latched in the temporary register III, 38. At this time, whether or not the result of the decrement is 0 is checked. Since "n" becomes 3 in a first loop, the operation is succeeded. Namely, the content of the temporary register III, 38 is outputted to the data bus 12, so that the decremented variable "n" (=3) is latched in the temporary register I, 34.

Then, the value of the automatic frequency division operation pointer stored in the temporary register II, 36 is read out and outputted through the ALU 22 and the temporary register III, 38 to the data bus 12. Thus, the ALU receives the value on the data bus and decrements it by 1. The result of the decrement is latched in the temporary register III, 38, whose content is then latched through the data bus 12 to the temporary register II, 36 and the address latch 30. The content of the latch 30 is outputted through the address bus 10 to the RAM 24, so that the count register III is designated and the content of the count register III is outputted to the ALU 22 for decrement.

Thereafter, similarly to the above mentioned operation for the count register IV, the contents of the count registers are decremented in the named order of the count register III, the count register II and the count register I, and the variable "n" is decremented each time one count register is decremented. Therefore, when the variable "n" becomes zero, the automatic frequency division operation is terminated. In the course of the automatic frequency division operation, if any one of the count registers becomes zero, since the interrupt request flag is then set, an interrupt acknowledge operation is executed after completion of the automatic frequency division operation.

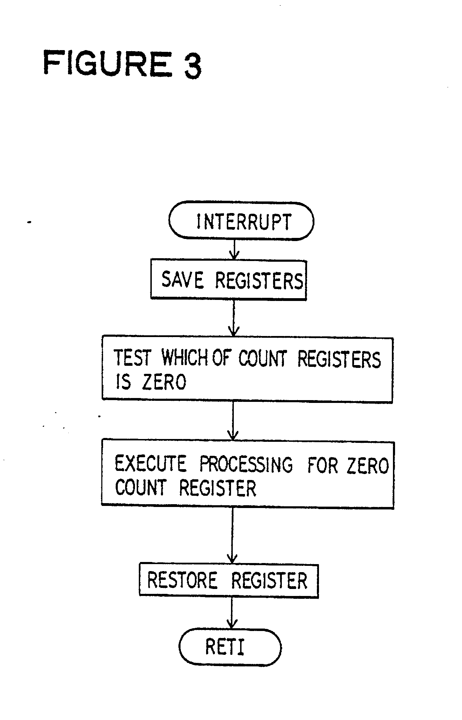

The interrupt acknowledge operation may be similar to the conventional method. As shown in the flow chart of Figure 3, the contents of the program counter 14 and the PSW register 40 is saved to the stack register 28. Then, which of the count registers is zero is tested, and an address of a vector for an interrupt operation corresponding to the count register of the content "0" is outputted from the constant generator 32 to the data bus 12, and further, is outputted through the address latch 30 to the address bus 10. Then, the vector in question is read out from the interrupt vector table 44 of the ROM 16 to the data bus 12, and then, stored through the address latch 30 and the address bus 10 to the program counter 14. Thereafter, the program is read out from the ROM 16 in accordance with the value of the program counter 14, and is executed under control of the controller 20. Thus, if the interrupt operation is terminated, the saved data is read from the stack registers 28 and restored to the program counter 14 and the PSW register 40.

The above mentioned automatic frequency division processing is executed each time the time base 46 generates the clock signal, i.e., the automatic frequency division request signal. Therefore, the four count registers I, II, III and IV are decremented one by one at the period of 1/220 second. If some count register becomes zero, an interrupt is generated so that the processing corresponding to the count register of zero is executed. Accordingly, if four different initial values are set to the four count registers, a timer of four channels can be realized. As mentioned hereinbefore, if the initial value of 1540 is set to the count register III, an interrupt is generated after a 1540th automatic frequency division operation is completed, i.e., after 7 seconds. As a result, the operation for the loading motor protection is executed.

As is apparent from the above explanation, the automatic frequency division operation is executed by effectively utilizing the existing hardwares for instruction execution, and therefore, does not require special and extra hardwares. In other words, only the time base is required as an additional hardware for the function equivalent to a plurality of timers, and so, the hardware can be greatly decreased as compared with the conventional microprocessor having a plurality of timers. Furthermore, as mentioned above, the contents of the respective count registers are decremented in response to each time base signal without saving the contents of the program counter and the PSW register. Therefore, the execution speed can be increased by the amount corresponding to the fact that the saving and restoring of the program counter and the PSW register are not executed, and also, a load to software is decreased. On the other hand, the above mentioned automatic frequency division operation generates an interrupt only when an operation should be executed in accordance with a predetermined program. Accordingly, the execution efficiency of the processing unit is not substantially decreased.

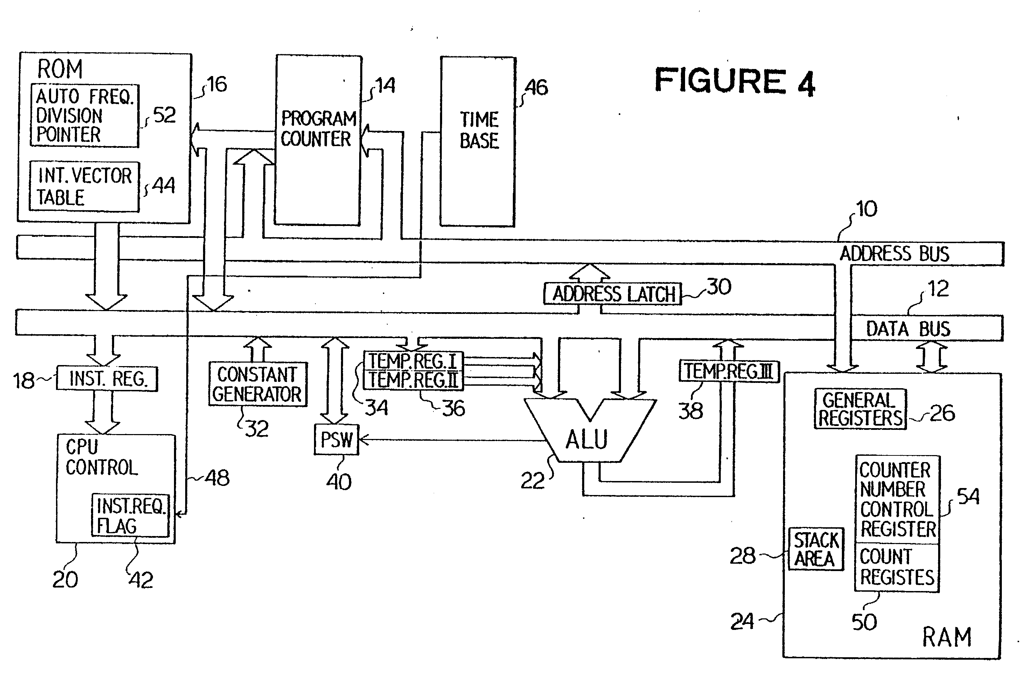

Turning to Figure 4, there is a modification of the microcomputer shown in Figure 1. Therefore, in Figure 4, circuits similar to those shown in Figure 1 are given the same Reference Numerals.

As seen from comparison between Figures 1 and 4, the modified microcomputer includes a count register number register 54 formed by a portion of the RAM 24. This register 54 holds the number of the count registers in the count register group 50 for frequency division of the time base output, and is located at an address just before the count register having a minimum address. In other words, if the count register number register 54 is formed at some address and set with the number N (N = 1, 2, ...), N continuous words starting from an address just after the register 54 are designated as the count register group 50. For example, if the register 54 has an address "100" and N = 5 is stored in the register 54, five registers of the addresses "101", "102", "103", "104" and "105" are designated as the count register group 50. Further, the pointer 52 is set to hold the address of the count register number register 54.

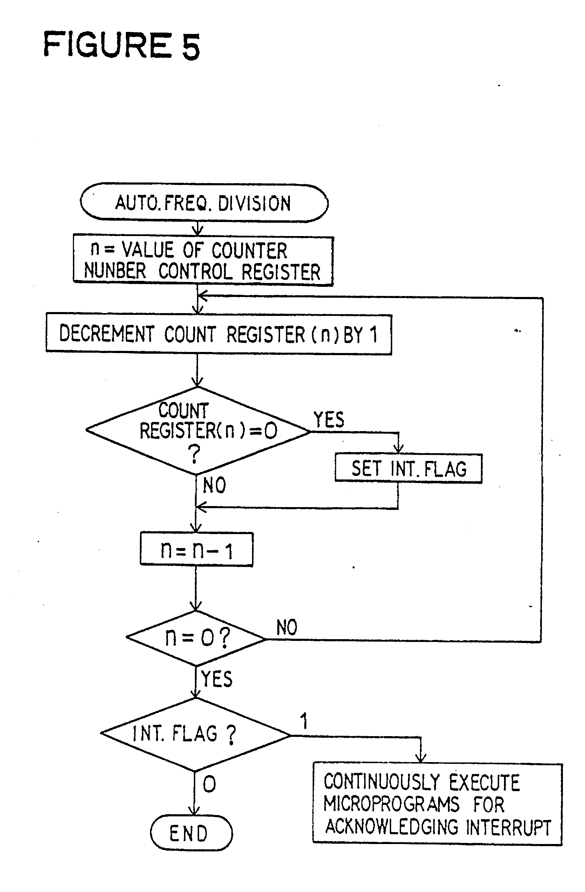

Next, operation will be explained with reference to the flow chart of Figure 5.

When the instruction request flag 42 is not set by the time base 46, the microcomputer operates, completely similarly to that shown in Figure 1. When the flag 42 is set by the time base 46, the pointer 52 is read out to the data bus 12 and latched in the temporary register II, 36 and the address latch 30. Then, the content of the address latch 30 is outputted through the address bus 10 to the RAM 24. As a result, the content of the count register number register 54 is read out to the data bus 12 and latched in the temporary register I, 34. At the same time, an operation of the value of the temporary register I1 plus the value on the data bus 1 is executed in the ALU 22. The result of the operation is latched in the temporary register III, 38, and then, transferred to the temporary register II, 36 through the data bus. Thus, the number of the count registers is latched in the temporary register I, 34, and the address of the count register having a maximum address in the count register group 50 is latched in the temporary register II, 36. The variable "n" can be set by a program, not by use of the constant generator. The succeeding operation is performed, similarly to the embodiment shown in Figure 1.

As seen from the above explanation, in the second embodiment shown in Figure 4, a desired number of timers can be realized only by addition of the count register number register 54. Therefore, it is very advantageous in that the number of timers can be set by a program.

The invention has thus been shown and described with reference to the specific embodiments. However, it should be noted that the invention is in no way limited to the details of the illustrated structures but changes and modifications may be made within the scope of the appended claims.

## Claims

1. A single chip microcomputer including a timer for generating a clock signal at a predetermined period, a memory storing necessary programs and various kinds of data, and a processing unit, characterized in that it comprises a plurality of count registers each counting the clock signal of the timer, and means checking the contents of the count registers for generating an interrupt request each time anyone of the count registers becomes a predetermined value, whereby a plurality of interrupt requests are generated at different time periods.

2. A microcomputer claimed in Claim 1 further including a pointer storing the address of the count registers, and wherein each time the timer generates the clock signal, the content of the pointer is read out, and the contents of the count registers are sequentially read out in accordance with an address read from the pointer, and then decremented, so that the result of decrement is rewritten to the same count registers.

3. A microcomputer claimed in Claim 2 further including a constant generator for generating an address of the pointer each time the timer generates the clock signal.

4. A microcomputer claimed in Claim 3 wherein the constant generator generates the number of the count registers, so that the processing unit causes to decrement the count registers of the number indicated by the constant generator.

5. A microcomputer claimed in Claim 1 further including a count register number register for storing the number of the count registers and provided at an address just before the count registers, and a pointer storing the address of the count register number register, and wherein each time the timer generates the clock signal, the content of the pointer is read out to allow the content of the count register number register to be read out, so that the processing unit knows the address and number of the count registers.

6. A microcomputer claimed in Claim 5 wherein each time the timer generates the clock signal, the contents of the count registers are sequentially read out in accordance with the address and the content of the count register number register, and then decremented, so that the result of decrement is rewritten to the same count registers.

7. A microcomputer comprising a program memory for storing programs, a program counter for generating an address for the program memory, an execution unit for executing a program in the program memory designated by the address generated from the program counter, a program status register, a generator for generating a time base signal at each predetermined time period, a timer register, and means in response to the time base signal to change a content of the timer register without saving contents of the program counter and the program status register.

FIGURE 1

# FIGURE 2

# FIGURE 3

```
        ( INTERRUPT )
              |
              v
     +------------------+
     |  SAVE REGISTERS  |
     +------------------+
              |
              v
  +------------------------------+
  | TEST WHICH OF COUNT REGISTERS|
  | IS ZERO                      |
  +------------------------------+
              |
              v
  +------------------------------+
  | EXECUTE PROCESSING FOR ZERO  |
  | COUNT REGISTER               |
  +------------------------------+
              |
              v
     +---------------------+
     | RESTORE  REGISTER   |
     +---------------------+
              |
              v
          ( RETI )
```

FIGURE 4

# FIGURE 5

```
        ( AUTO. FREQ. DIVISION )
                  │
        ┌─────────▼──────────────┐
        │ n = VALUE OF COUNTER   │
        │ NUNBER  CONTROL REGISTER│
        └─────────┬──────────────┘
                  │        ◄──────────────────────┐
        ┌─────────▼──────────────────────┐        │
        │ DECREMENT COUNT REGISTER (n) BY 1│       │
        └─────────┬──────────────────────┘        │
                  │                               │
               ◇  COUNT                           │
              ◇  REGISTER(n)=O ◇  YES             │
               ◇     ?    ◇ ────────┐             │
                  │ NO             ┌─▼──────────┐ │
                  │                │ SET INT.FLAG│ │
                  │◄───────────────┴────────────┘ │
                  │                               │
           ┌──────▼──────┐                        │
           │  n = n − 1  │                        │
           └──────┬──────┘                        │
                  │                               │
               ◇ n = O ? ◇  NO ───────────────────┘
                  │ YES
               ◇ INT. FLAG ? ◇  1 ──────┐
                  │ O                    │
                  │              ┌───────▼──────────────┐
               ( END )           │ CONTINUOUSLY EXECUTE  │
                                 │ MICROPROGRAMS  FOR    │
                                 │ ACKNOWLEDGING INTERRUPT│
                                 └───────────────────────┘
```